# EUROPEAN PATENT APPLICATION

(11) **EP 3 843 346 A1**
(43) Date of publication of application: **30.06.2021**
(21) Application number: 18930838.0
(22) Date of filing: 21.08.2018
(51) Int. Cl.: H04L 27/26, H04L 27/00

(54) **USER DEVICE AND TRANSMISSION POWER CONTROL METHOD**

(71) Applicant: NTT DoCoMo, Inc., Tokyo 100-6150 (JP)
(72) Inventor: SANO, Yousuke, Tokyo 100-6150 (JP); UMEDA, Hiromasa, Tokyo 100-6150 (JP); TAKAHASHI, Hideaki, Tokyo 100-6150 (JP)
(74) Representative: Hoffmann Eitle
(86) International application number: PCT/JP2018/030879
(87) International publication number: WO 2020/039511

(57) **Abstract**

A user equipment includes a transmission unit configured to transmit a signal; and a control unit configured to determine, according to a power class, a maximum transmission power for transmitting the signal . The control unit causes the maximum transmission power to change according to a modulation method for the signal.

## Description

### TECHNICAL FIELD

The present invention relates to a user equipment and a transmission power control method in a wireless communication system.

### BACKGROUND ART

In the 3GPP (3rd Generation Partnership Project), a wireless communication method called 5G or NR (New Radio) (hereinafter, the wireless communication method will be referred to as "5G" or "NR") has been studied in order to further increase a capacity of the system, further increase a data transmission speed, and further reduce a delay in a wireless communication area, and the like. For 5G, various wireless technologies have been studied so that 5G satisfies the requirement that the delay in the wireless communication area is 1 ms or less while achieving throughput of 10 Gbps or more.

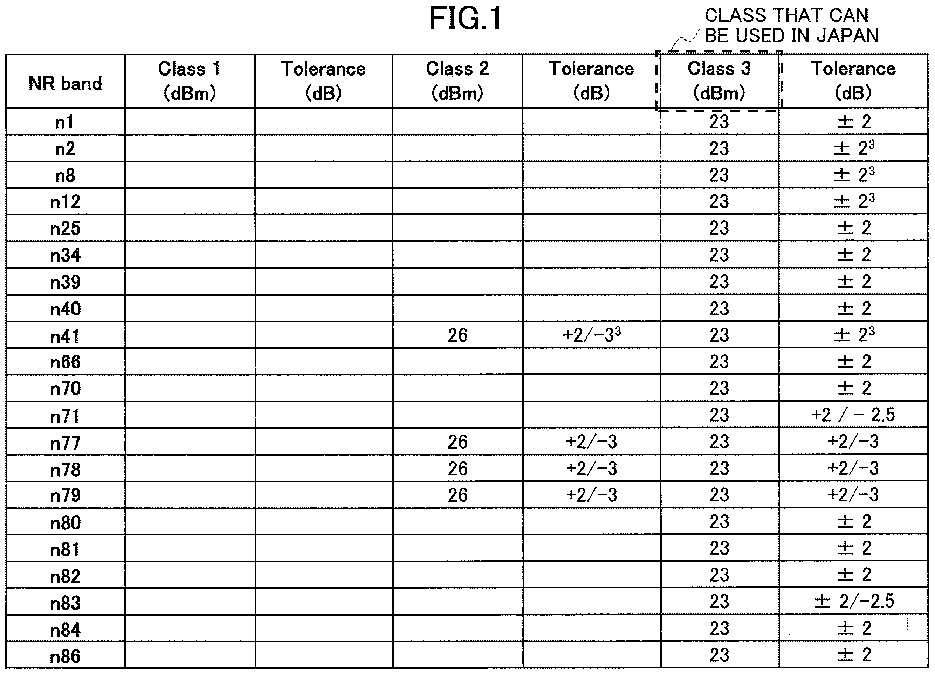

In 3GPP, a plurality of power classes (PC) having different maximum transmission powers are introduced. As illustrated in FIG. 1, the power class with a maximum transmission power of 23 dBm is defined as power class 3 (PC3). In addition to PC3, there is a power class 2 (PC2) having a maximum transmission power of 26 dBm (See, for example, Non-patent Document 1). In Japan, user equipments are required to have signal transmission powers of 23 dBm or less, regardless of modulation methods, for legal regulations.

### PRIOR ART DOCUMENT

### NON-PATENT DOCUMENTS

Non-patent Document 1: 3GPP TS 38.101-1 V15.2.0 (2018-06)
Non-patent Document 2: 3GPP TS 36.304 V15.0.0 (2018-06)

### SUMMARY OF THE INVENTION

### PROBLEM TO BE SOLVED BY THE INVENTION

Conventionally, a predetermined maximum transmission power has been assigned to a predetermined power class, and the maximum transmission power could not be changed according to a modulation method.

The present invention has been made in view of the foregoing, and aims at extending a power class of a user equipment in a wireless communication system to allow a different maximum transmission power according to a specified modulation method.

### MEANS FOR SOLVING PROBLEMS

According to an aspect of the present disclosure, a user equipment including a transmission unit configured to transmit a signal; and a control unit configured to determine, according to a power class, a maximum transmission power for transmitting the signal, the control unit causing the maximum transmission power to change according to a modulation method for the signal, is provided.

### EFFECT OF INVENTION

According to an aspect of the present disclosure, in a wireless communication system, a power class of a user equipment can be extended to allow a different maximum transmission power according to a specified modulation method.

### BRIEF DESCRIPTION OF THE DRAWINGS

[FIG. 1] FIG. 1 is a diagram for explaining a plurality of power classes having different maximum transmission powers.
[FIG. 2] FIG. 2 is a diagram for explaining a Pi/2 BPSK.
[FIG. 3] FIG. 3 is a diagram for explaining a Pi/2 BPSK with spectrum shaping.
[FIG. 4] FIG. 4 is a diagram for explaining a wireless communication system according to an embodiment of the present disclosure.
[FIG. 5] FIG. 5 is a diagram depicting an example of an extended power class 3.
[FIG. 6] FIG. 6 is a diagram illustrating a formula for calculating a maximum transmission power allowed for a user equipment.
[FIG. 7] FIG. 7 is a diagram illustrating a formula of a rule of cell selection (Srxlev) during an idle time of the user equipment.
[FIG. 8] FIG. 8 is a diagram depicting an example of a functional configuration of a base station apparatus 10 according to the embodiment of the present disclosure.
[FIG. 9] FIG. 9 is a diagram depicting an example of a functional configuration of the user equipment 20 according to the embodiment of the present disclosure.
[FIG. 10] FIG. 10 is a diagram depicting an example of a hardware configuration of the base station apparatus 10 or the user equipment 20 according to the embodiment of the present disclosure.

### MODES FOR CARRYING OUT THE INVENTION

Hereinafter, embodiments of the present disclosure will be described with reference to the drawings. Note that embodiments described below are exemplary, and embodiments to which the present disclosure applies are not limited to the following embodiments.

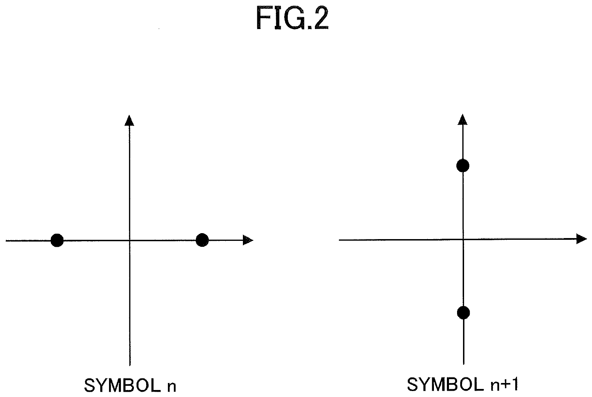

In the NR of Release 15, Pi/2 BPSK has been introduced as an uplink modulation method. As shown in FIG. 2, in Pi/2 BPSK, an amplitude variation of a transmission signal does not pass through the origin by rotating a phase 90 degrees per symbol. By using Pi/2 BPSK, the power amplifier can be operated near a power saturation point. Thus, power efficiency is enhanced.

In the 3GPP, further enhancement of the power efficiency and a reduction of a PAPR (Peak-to-Average Power Ratio) have been studied by applying frequency filters to Pi/2 BPSK. Pi/2 BPSK to which the frequency filter is applied, is called Pi/2 BPSK with spectrum shaping, and is distinguished, in the standardization, from Pi/2 BPSK without spectrum shaping, to which a frequency filter is not applied.

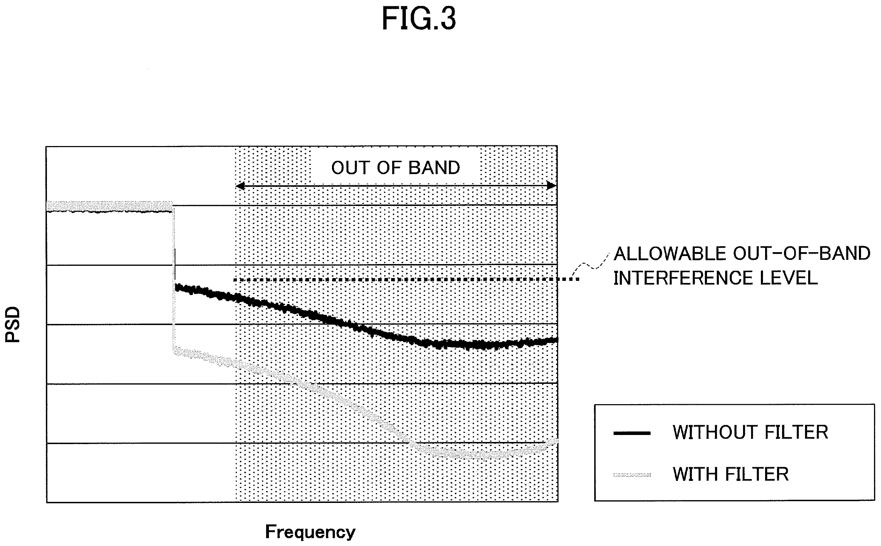

It is known that because the PAPR can be reduced in Pi/2 BPSK with spectrum shaping, the transmission signal distortion arising from a non-linear region of the power amplifier can be reduced, and an out-of-band interference can be reduced as shown in FIG. 3. Thus, when Pi/2 BPSK with spectrum shaping is applied, the maximum transmission power of the user equipment can be increased (e.g. 3 dBm) while satisfying a desired out-of-band interference level.

If the maximum transmission power of the user equipment can be increased, an increase of coverage can be expected. However, the maximum transmission powers are often regulated by laws and regulations depending on countries or regions.

Accordingly, when Pi/2 BPSK with spectrum shaping is applied, it is desirable that the maximum transmission power of the user equipment can be flexibly set, in accordance with a status of each country's laws and regulations. As described above, in the present status of laws and regulations in Japan, transmission power greater than 23 dBm is not allowed regardless of the modulation method. Moreover, in the present technical specification documentation of NR and LTE, it is not possible to change the maximum transmission power, depending on the modulation method.

Moreover, depending on whether Pi/2 BPSK with spectrum shaping is used, the coverage varies. Thus, it is desirable that a cell selection method of the user equipment can be flexibly set depending on whether Pi/2 BPSK with spectrum shaping is used.

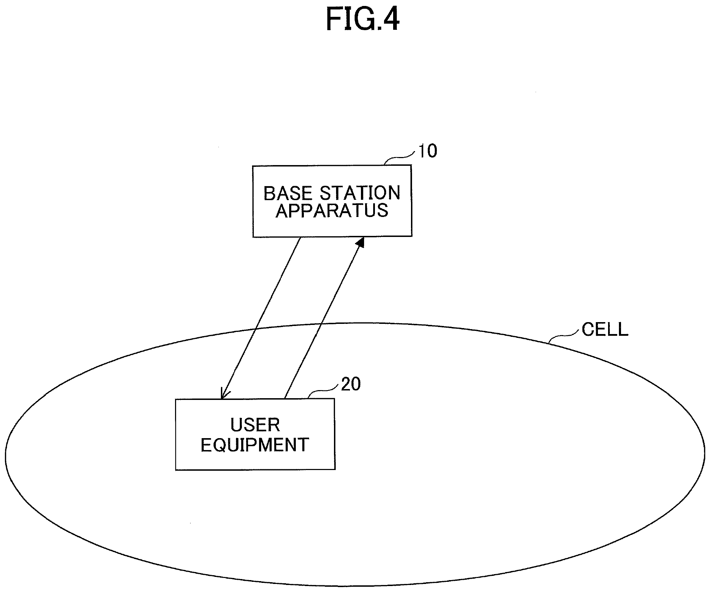

FIG. 4 is a diagram for explaining a wireless communication system according to the embodiment of the present disclosure. As shown in FIG. 4, the wireless communication system in the embodiments of the present disclosure includes a base station apparatus 10 and a user equipment 20.

The base station apparatus 10 communicates with the user equipment 20 via a wireless bearer established between the base station apparatus 10 and the user equipment 20. The base station apparatus 10 may be referred to as an "eNB (enhanced NodeB) ", an "NR (New Radio) node", a "gNB (Next generation NodeB)", or the like.

The user equipment 20 is a terminal that frequently transmits and receives large amounts of data (MBB (Mobile Broad Band) terminal), such as a smartphone, or a terminal that transmits and receives small amounts of data at a low frequency (MTC (Machine Type Communication) terminal), such as an IoT device. In the embodiment of the present disclosure, the user equipment 20 includes any type (UE category) of user equipment 20.

The following shows a method for enabling the power class of the user equipment 20 to be expanded in the wireless communication system, to allow different maximum transmission power depending on the specified modulation method.

### (Method 1)

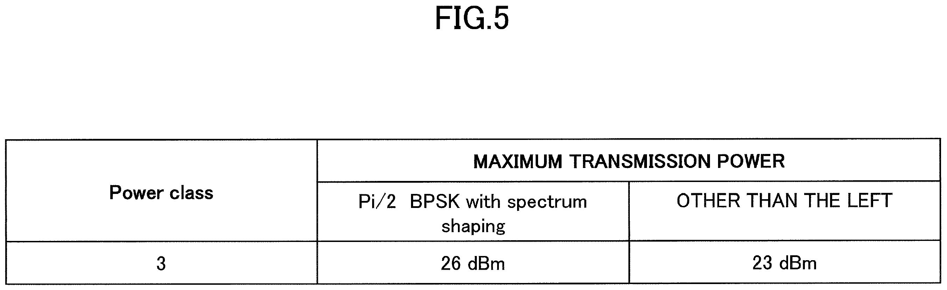

FIG. 5 is an example of the extended power class 3. The power class as shown in FIG. 5 is defined as a method 1 that expands the power class of the user equipment 20, to allow different maximum transmission power depending on the specified modulation method.

As shown in FIG. 5, in the extended power class 3, when Pi/2 BPSK with spectral shaping is set as the modulation method, the maximum transmission power is 26 dBm, and when a method with the exception of Pi/2 BPSK with spectral shaping is set as the modulation method, the maximum transmission power is 23 dBm.

The user equipment 20 reports the power class to a network (NW), i.e. the base station apparatus 10, as a UE capability, in substantially the same manner as with the existing LTE or NR. The numerical values shown in FIG. 5 are exemplary and may be different values. In addition, the "with spectrum shaping" in Pi/2 BPSK with spectrum shaping may be omitted. That is, the modulation method may be Pi/2 BPSK. Moreover, Pi/2 BPSK is exemplary, and a predetermined maximum transmission power may be specified for a predetermined modulation method with the exception of Pi/2 BPSK.

### (Method 2)

As a method 2 that expands the power class of the user equipment 20, and enables different maximum transmission power, according to the specified modulation method, the user equipment 20 may transmit a signal using transmission power of the existing power class or more, only when the network NW issues an indication. If the network NW does not issue an indication, transmission with power that exceeds the transmission power of the existing power class (e.g. 23 dBm) is not allowed, regardless of the modulation method.

### (Method 2-1)

As the first indication/instruction method (Method 2-1) from the network NW of Method 2, the network NW may indicate the maximum transmission power to the user equipment 20. Means for indication includes broadcasting, an RRC, a dynamic signaling, or the like.

### (Method 2-2)

As the second indication method (Method 2-2) from the network NW of Method 2, information may be transmitted from the network NW to the user equipment 20 that a signal may be transmitted at a transmission power exceeding 23 dBm, for example. The information that a signal may be transmitted at a transmission power exceeding 23 dBm can be transmitted, for example, as information of one bit. Means for transmitting information that a signal may be transmitted at a transmission power exceeding 23 dBm includes broadcasting, an RRC, a Dynamic signaling, or the like.

Method 1, Method 2, Method 2-1, and Method 2-2 may be used alone or in any suitable combination.

### (Supplement to limitation of maximum transmission power)

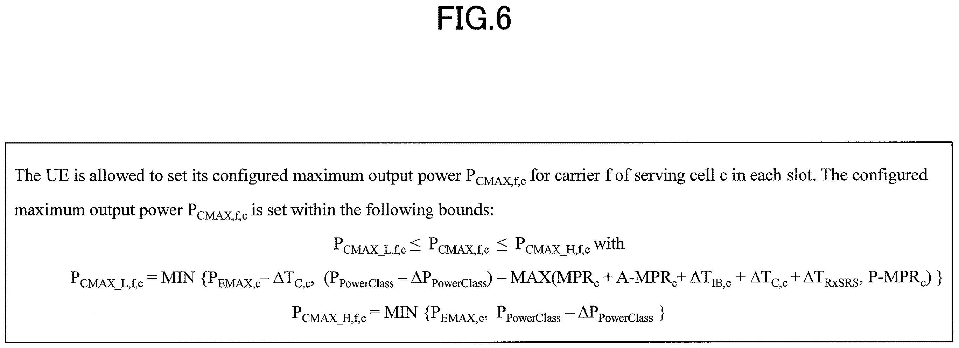

FIG. 6 illustrates an equation for calculating the maximum transmission power allowable to be transmitted by the user equipment 20 (See Non-Patent Document 1, Section 6.2.4).

In NR or LTE, P_{EMAX,c} is signaled from the network NW to the user equipment 20 (SIB (System Information Block)). When the P_{EMAX,c} is signaled from the network NW (Method 2-1), the user equipment 20 calculates the maximum transmission power (P_{CMSX_H.f.c}) using the equation shown in FIG. 6. If P_{EMAX,c} is not signaled from the network NW, the terms of P_{EMAX,c} in the equation shown in FIG. 6 are ignored.

For example, the described Method 1 can be realized by setting P_{PowerClass} in the formula shown in FIG. 6 to 26 dBm (for PC3) only when the modulation method is Pi/2 BPSK with spectrum shaping. Alternatively, in the equation shown in FIG. 6, ΔP_{PowerClass} may be set to -3 dBm (for PC3) only when the modulation method is Pi/2 BPSK with spectrum shaping.

Note that in the described embodiment, the maximum transmission power is specified to be increased only in some modulation methods. However, the maximum transmission power may be specified to be lowered only in some modulation methods.

Moreover, in the described embodiment, the maximum transmission power for some modulation methods is specified to be increased for the power class 2 (maximum 23 dBm) with a low maximum transmission power. However, an A-MPR (Additional allowed Maximum Power Reduction), which reduces the transmission power for some modulation methods for the power class 2 (maximum 26 dBm), may be specified. For example, the A-MPR of +3 dBm may be specified for modulation methods with the exception of Pi/2 BPSK.

### (Setting of appropriate cell coverage (selection of cells))

As described above, if the maximum transmission power of the user equipment 20 can be increased, an increase in coverage can be expected.

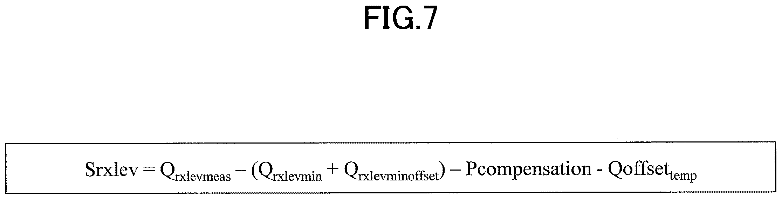

FIG. 7 is an expression illustrating a rule of cell selection (Srxlev) during an idle time of the user equipment 20. The following shows setting methods for setting an appropriate cell coverage when the maximum transmission power of the user equipment 20 can be increased.

### (Setting Method 1)

In the equation shown in FIG. 7, Srxlev may be directly offset by 3 dB, as a setting method 1 for setting the appropriate cell coverage when the maximum transmission power of the user equipment 20 can be increased.

### (Setting Method 2)

In the equation shown in FIG. 7, Qᵣₓₗₑᵥₘᵢₙ may be offset by 3 dB, as a setting method 2 for setting the appropriate cell coverage when the maximum transmission power of the user equipment 20 can be increased.

### (Setting Method 3)

In the equation shown in FIG. 7, Q_{rxlevminoffset} may be offset by 3 dB, as a setting method 3 for setting the appropriate coverage when the maximum transmission power of the user equipment 20 can be increased.

### (Setting Method 4)

In the equation shown in FIG. 7, Pcompensation may be offset by 3 dB, as a setting method 4 for setting the appropriate coverage when the maximum transmission power of the user equipment 20 can be increased.

### (Setting Method 5)

In the equation shown in FIG. 7, Qoffsetₜₑₘₚ may be offset by 3 dB, as a setting method 5 for setting the appropriate coverage when the maximum transmission power of the user equipment 20 can be increased.

It may be determined whether or not the above setting method is applied in accordance with the signaling (indication from the network NW) in Method 2.

In the case of Method 2-1, the above setting method may be applied only when a value greater than 23 dBm is signaled.

In the case of Method 2-2, the above setting method may be applied only when a signal is signaled to be transmitted at a transmission power greater than 23 dBm.

### (Equipment Configuration)

Next, a functional configuration example of the base station apparatus 10 and the user equipment 20 that perform the processes and operations described above will be described. The base station apparatus 10 and the user equipment 20 include functions of implementing the embodiments described above. However, each of the base station apparatuses 10 and the user equipment 20 may include only a part of the functions in the embodiments.

### <Base station apparatus 10>

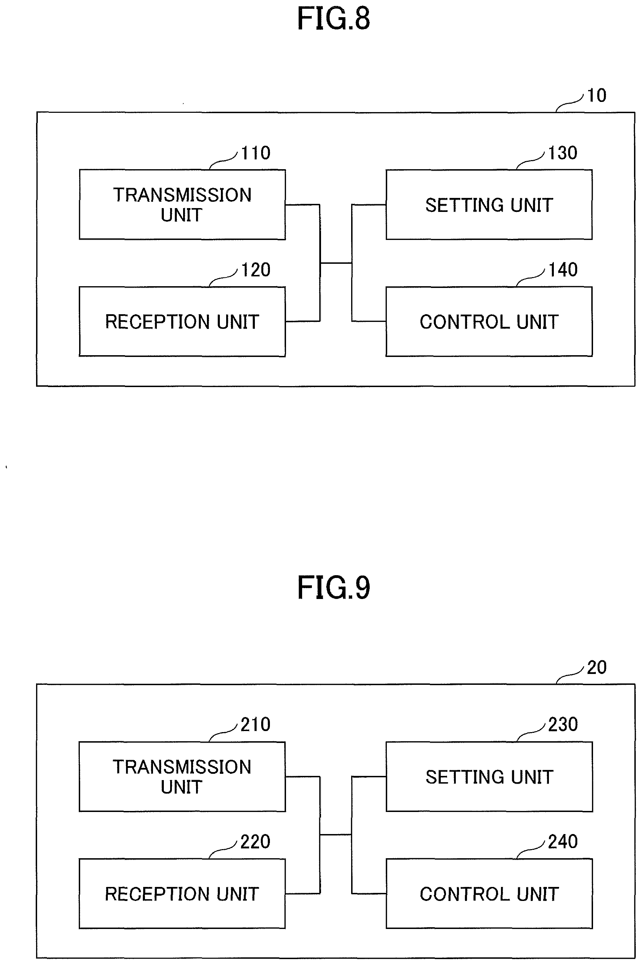

FIG. 8 is a diagram illustrating an example of a functional configuration of the base station apparatus 10. As shown in FIG. 8, the base station apparatus 10 includes a transmission unit 110, a reception unit 120, a setting unit 130, and a control unit 140. The functional configuration shown in FIG. 8 is merely an example. As long as the operations according to the embodiments of the present disclosure can be performed, any name may be assigned to the functional category and the functional part.

The transmission unit 110 includes a function of generating a signal to be transmitted to the user equipment 20 and transmitting the signal wirelessly. The reception unit 120 includes a function of receiving various signals transmitted from the user equipment 20 and acquiring information of a higher layer, for example, from the received signal. The transmission unit 110 transmits (indicates) the maximum transmission power to the user equipment 20 using the broadcasting, the RRC, the Dynamic signaling, or the like. Alternatively, the transmission unit 110 transmits information to the user equipment 20 that a signal may be transmitted at a transmission power exceeding a predetermined transmission power.

The setting unit 130 stores preset setting information and various setting information to be transmitted to the user equipment 20 in the storage device, and reads out the setting information from the storage device as necessary.

The control unit 140 indicates, to the user equipment 20, to transmit the maximum transmission power using the broadcasting, the RRC, the Dynamic signaling, or the like through the transmission unit 110. Alternatively, through the transmission unit 110 the control unit 140 transmits information to the user equipment 20 that a signal may be transmitted at the transmission power exceeding the predetermined transmission power. A function part for transmitting signals in the control unit 140 may be included in the transmission unit 110, and a function part for receiving signals in the control unit 140 may be included in the reception unit 120.

### <User equipment 20>

FIG. 9 is a diagram illustrating an example of a functional configuration of the user equipment 20. As shown in FIG. 9, the user equipment 20 includes a transmission unit 210, a reception unit 220, a setting unit 230, and a control unit 240. The functional configuration shown in FIG. 9 is merely an example. As long as the operations according to the embodiments of the present disclosure can be performed, any name may be assigned to the functional category and the functional part.

The transmission unit 210 generates a transmission signal from the transmission data, and transmits the transmission signal wirelessly. The reception unit 220 receives various signals wirelessly, and acquires a higher layer signal from the received signal of physical layer.

The setting unit 230 stores various setting information, received from the base station apparatus 10 or the user equipment 20 by the reception unit 220, in the storage device, and reads out the setting information from the storage device as necessary. Moreover, the setting unit 230 also stores the preset information.

The control unit 240 controls the transmission unit 210 to transmit a signal based on the maximum transmission power according to the definition of the extended power class, as described in the embodiment. Alternatively, the control unit 240 controls the transmission unit 210 so as to transmit a signal based on the maximum transmission power following an indication received from the base station apparatus 10.

### (Hardware Configuration)

Block diagrams (FIGS. 8 and 9) used in the description of the above-described embodiment illustrates blocks of functional units. These functional blocks (components) are implemented by any combination of hardware and/or software. Moreover, the method of implementing each functional block is not particularly limited. That is, each functional block may be implemented using one device that is physically or logically coupled, or may be implemented using two or more devices that are physically or logically separated and are connected directly or indirectly (e.g. using wires, wireless, etc.). Functional blocks may be implemented in combination with software in one or more of the above-described devices.

Functions include judgment, determination, decision, computing, calculation, processing, derivation, investigation, discovery, confirmation, reception, transmission, output, access, resolution, selection, establishment, comparison, assumption, expectation, deeming, broadcasting, notifying, communicating, forwarding, configuring, reconfiguring, allocating, mapping, and assigning, but are not limited to them. For example, a functional block (component) that causes "transmission" to function is called a transmission unit or a transmitter. A method of implementing any of the functions is not particularly limited, as described above.

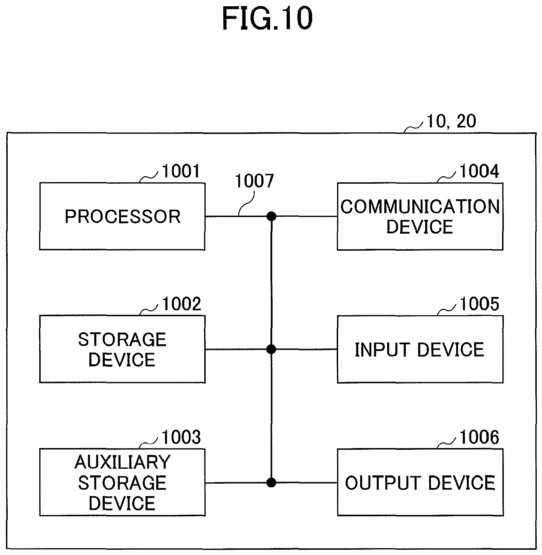

For example, the base station apparatus 10, the user equipment 20, or the like in one embodiment of the present disclosure may function as a computer that performs processing in accordance with embodiments of the present disclosure. FIG. 10 is a diagram illustrating an example of a hardware configuration of the base station apparatus 10 and the user equipment 20 according to an embodiment of the present disclosure. The base station apparatus 10 and the user equipment 20 described above may be physically configured as a computer device including a processor 1001, a storage device 1002, an auxiliary storage device 1003, a communication device 1004, an input device 1005, an output device 1006, a bus 1007, and the like.

Note that in the following description, the term "device" can be read as a circuit, a device, a unit, or the like. The hardware configuration of the base station apparatus 10 and the user equipment 20 may be configured to include one or more of the devices indicated by 1001-1006 in the drawings, or may be configured without some devices.

Each function in the base station apparatus 10 and the user equipment 20 is achieved by having the processor 1001 read a predetermined software (program) on hardware such as the storage device 1002, to perform the operation by the processor 1001, to control communication by the communication device 1004 or to control at least one of reading and writing data in the storage device 1002 and the auxiliary storage device 1003.

The processor 1001, for example, operates an operating system to control the entire computer. The processor 1001 may include a central processing unit (CPU) including interfaces with peripheral devices, control devices, computing devices, registers, and the like.

Moreover, the processor 1001 reads programs (program codes), software modules, data, and the like from at least one of the auxiliary storage device 1003 and the communication device 1004 to the storage device 1002, and performs various processing in accordance therewith. For the program, a program that causes a computer to execute at least a portion of the operation described in the above-described embodiments is used. For example, the transmission unit 110, the reception unit 120, the setting unit 130, and the control unit 140 of the base station apparatus 10, illustrated in FIG. 8, may be implemented by a control program that is stored in the storage device 1002 and operates in the processor 1001. Moreover, for example, the transmission unit 210, the reception unit 220, the setting unit 230, and the control unit 240 of the user equipment 20, illustrated in FIG. 9, may be implemented by a control program that is stored in the storage device 1002 and operates in the processor 1001. While the various processes described above have been described as being executed by one processor 1001, they may be executed simultaneously or sequentially by two or more processors 1001. Processor 1001 may be implemented by one or more chips. Note that the program may be transmitted from the network via a telecommunications line.

The storage device 1002 is a computer readable storage medium. The storage device 1002 may be configured of at least one of, for example, a ROM (Read Only Memory), an EPROM (Erasable Programmable ROM), an EEPROM (Electrically Erasable Programmable ROM), or a RAM (Random Access Memory) . The storage device 1002 may be referred to as a register, a cache, a main memory (main storage device), or the like. The storage device 1002 can store programs (program codes), software modules, and the like that are executable to perform the processing according to one embodiment of the present disclosure.

The auxiliary storage device 1003 is a computer readable storage medium. The auxiliary storage device 1003 may be configured of, for example, at least one of an optical disk, such as a CD-ROM (Compact Disc ROM); a hard disk drive; a flexible disk; an optical magnetic disk (e.g. a compact disk, a digital versatile disk, or a Blu-ray (trademark registered) disk) ; a smart card; a flash memory (e.g. a card, a stick, or a key drive) ; a floppy (Trademark registered) disk, a magnetic strip, or the like. The auxiliary storage device 1003 may be referred to as an auxiliary memory device. The storage medium described above may be, for example, a database, a server, or other suitable medium including at least one of the storage device 1002 and the auxiliary storage device 1003.

The communication device 1004 is hardware (transceiver device) for communicating between computers via at least one of a wired network and a wireless network. The communication device 1004 is also referred to, for example, as a network device, a network control unit, a network card, a communication module, or the like. The communication device 1004 may include a high frequency switch, a duplexer, a filter, a frequency synthesizer, or the like to achieve, for example, at least one of a Frequency Division Duplex (FDD) and a Time Division Duplex (TDD). For example, the transmission unit 110 and the reception unit 120 of the base station apparatus 10 may be implemented by the communication device 1004. Moreover, the transmission unit 210 and the reception unit 220 of the user equipment 20 may be implemented by the communication device 1004.

The input device 1005 is an input device (e.g. a keyboard, a mouse, a microphone, a switch, a button, a sensor, etc.) that receives an external input. The output device 1006 is an output device (e.g. a display, a speaker, an LED lamp, etc.) that performs output to the outside. The input device 1005 and the output device 1006 may be integrated (e.g. a touch panel).

Moreover, respective devices, including the processor 1001 and the storage device 1002, are connected by a bus 1007 for communicating information. The bus 1007 may be configured using a single bus or may be configured using different buses between devices.

Moreover, each of the base station apparatus 10 and the user equipment 20 may be configured including hardware such as a microprocessor, a digital signal processor (DSP), an ASIC (Application Specific Integrated Circuit), a PLD (Programmable Logic Device), or a FPGA (Field Programmable Gate Array) . The hardware may also implement some or all of each functional block. For example, the processor 1001 may be implemented using at least one of the hardware.

### (Summary of Embodiment)

As described above, according to the embodiment of the present disclosure, a user equipment is provided, including a transmission unit for transmitting a signal; and a control unit for determining, in accordance with a power class, the maximum transmission power for transmitting the signal, wherein the control unit causes the maximum transmission power to change according to a modulation method for the signal.

According to the above-described configuration, in the wireless communication system, the power class of the user equipment can be extended, and the maximum transmission power can be made different depending on the set modulation method.

According to the embodiment of the present disclosure, the user equipment 20 can make the maximum transmission power different, in accordance with the modulation method of the signal, only when an indication from the base station apparatus is received.

According to the embodiment of the present disclosure, a user equipment is provided including a transmission unit for transmitting a signal; and a control unit for determining, in accordance with a power class, the maximum transmission power for transmitting the signal, the control unit causing the maximum transmission power to change according to an indication from the base station apparatus.

The "maximum transmission power" described in the present disclosure may be a maximum value of the transmission power, a nominal UE maximum transmission power, or a rated UE maximum transmission power.

### (Supplement to Embodiments)

While the embodiments of the present invention have been described above, the disclosed invention is not limited to such embodiments, and those skilled in the art will understand various variations, modifications, alternatives, substitutions, and the like. Descriptions have been made using specific numerical examples to facilitate understanding of the invention. However, unless otherwise indicated, these values are merely examples and any suitable value may be used. Classification of the items in the above description is not essential to the present invention, and matters described in two or more items may be used in combination as necessary, or a matter described in one item may be applied (unless inconsistent) to a matter described in another item. Boundaries of functional parts or processing parts in the functional block diagram do not necessarily correspond to boundaries of physical parts. An operation of a plurality of functional parts may be physically performed on one part or the operation of one functional part may be physically performed on more than one part. For the processing procedures described in the embodiment, the order of processing may be changed as long as there is no inconsistency. For the convenience of description of the process, the base station apparatus 10 and the user equipment 20 have been described using functional block diagrams. However, such devices may be implemented in hardware, software, or a combination thereof. Software operated by the processor in the base station apparatus 10 in accordance with embodiments of the present invention and software operated by the processor in the user equipment 20 in accordance with embodiments of the present invention may be stored in a random access memory (RAM), a flash memory, a read-only memory (ROM), an EPROM, an EEPROM, a register, a hard disk (HDD), a removable disk, a CD-ROM, a database, a server, or any other suitable storage medium, respectively.

Moreover, indication/notification of information is not limited to the forms/embodiments described in the specification, and may be performed in other ways. For example, the indication/notification of information may be implemented by physical layer signaling (e.g. DCI (Downlink Control Information), or UCI (Uplink Control Information)); upper layer signaling (e.g. RRC (Radio Resource Control) signaling, or MAC (Medium Access Control) signaling); broadcast information (MIB (Master Information Block), or SIB (System Information Block)); or other signals or combinations thereof. Moreover, the RRC signaling may be referred to as an RRC message, and may be referred to as, for example, an RRC connection setup message, or an RRC connection reconfiguration message.

Each form/embodiment described in the present disclosure may be applied to at least one of a system utilizing LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), or any other suitable systems; and a next generation system extended based on the systems. Moreover, a plurality of systems may also be combined and applied (e.g. a combination of at least one of LTE and LTE-A with 5G) .

For the processing procedures, the sequences, the flow charts, or the like of each form/embodiment described in the specification, the order thereof may be changed as long as there is no inconsistency. For example, the methods described in the present specification present elements of various steps in an exemplary order, and are not limited to the particular order that is presented.

The particular operation described in the present specification to be performed by the base station apparatus 10 may be performed by an upper node thereof in some cases. It is apparent that in a network including one or more network nodes having the base station apparatus 10, various operations performed for communication with the user equipment 20 may be performed by the base station apparatus 10 and/or other network nodes (e.g. MME or S-GW, but are not limited to this) with the exception of the base station apparatus 10. Although one other network node with the exception of the base station apparatus 10 is illustrated above, a combination of multiple other network nodes (e.g. MME and S-GW) may be present.

Each of the forms/embodiments described in the present specification may be used alone, in combination, or switched upon implementation.

The user equipment 20 may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

The base station apparatus 10 may be referred to, by a person skilled in the art, as NB (NodeB), eNB (evolved NodeB), gNB, a base station, or some other suitable terms.

The term "determining" as used in this disclosure may encompass a wide variety of operations. The term "determination" may include, for example, deeming as "determining" judging, calculating, computing, processing, deriving, investigating, looking up, searching, inquiring (e.g. looking up in a table, a database or other data structures), or ascertaining. The term "determining" may include, for example, deeming as "determining" receiving (e.g. receiving information), transmitting (e.g. transmitting information), input, output, or accessing (e.g. accessing data in memory). The term "determining" may include deeming as "determining" resolving, selecting, choosing, establishing, comparing, or the like. In other words, the term "determining" may include deeming any action as "determining". Moreover, the term "determining" may be read as "assuming", "expecting", "considering", or the like.

The phrase "based on" used in the present specification does not mean "based only on", unless otherwise specified. In other words, "based" means both "based only on" and "at least based on".

As long as the terms "include", "including" and variation thereof used in the present specification or in claims, these terms are intended to be inclusive, as are the term "comprising". Furthermore, the term "or" used in the present specification or in claims is not intended to be an exclusive logical sum.

In the entirety of the present disclosure, if an article is added by translation, such as, for example, "a", "an", and "the" in English, these articles may include plural forms, unless the context clearly indicates that they are not.

As described above, the invention has been described in detail. However, it will be apparent to those skilled in the art that the invention is not limited to the embodiments described in the present specification. The present invention can be implemented as variations and modifications without departing from the spirit and scope of the invention as defined by claims. Accordingly, the description in the present specification is intended for illustrative purposes and does not have any limiting significance to the present invention.

### EXPLANATION OF REFERENCE SIGNS

- 10: base station apparatus
- 110: transmission unit
- 120: reception unit
- 130: setting unit
- 140: control unit
- 20: user equipment
- 210: transmission unit
- 220: reception unit
- 230: setting unit
- 240: control unit
- 1001: processor
- 1002: storage device
- 1003: auxiliary store device
- 1004: communication device
- 1005: input device
- 1006: output device

## Claims

1. A user equipment comprising:
a transmission unit configured to transmit a signal; and
a control unit configured to determine, according to a power class, a maximum transmission power for transmitting the signal,
wherein the control unit causes the maximum transmission power to change according to a modulation method for the signal.

2. The user equipment according to claim 1,
wherein the control unit causes the maximum transmission power to change according to the modulation method for the signal in a case where an indication from a base station apparatus is received.

3. A user equipment comprising:
a transmission unit configured to transmit a signal; and
a control unit configured to determine, according to a power class, a maximum transmission power for transmitting the signal,
wherein the control unit causes the maximum transmission power to change according to an indication from a base station apparatus.

4. The user equipment according to claim 2 or 3,
wherein the indication from the base station apparatus includes information indicating the maximum transmission power or indicating to change the maximum transmission power.

5. A transmission power control method for a user equipment, comprising:
transmitting a signal; and
determining, according to a power class, a maximum transmission power for transmitting the signal,
wherein the determining includes causing the maximum transmission power to change according to a modulation method for the signal.

6. A transmission power control method for a user equipment, comprising:
transmitting a signal; and
determining, according to a power class, a maximum transmission power for transmitting the signal,
wherein the determining includes causing the maximum transmission power to change according to an indication from a base station apparatus.
